Europäisches Patentamt

European Patent Office

Office européen des brevets

(19)

(11) Numéro de publication: **0 104 109**
**B1**

(12) **FASCICULE DE BREVET EUROPEEN**

(45) Date de publication du fascicule du brevet: 20.04.88

(21) Numéro de dépôt: **83401727.9**

(22) Date de dépôt: **30.08.83**

(51) Int. Cl.⁴: **H 05 H 1/30**

(54) **Perfectionnements aux torches à plasma.**

(30) Priorité: **16.09.82 FR 8215682**

(43) Date de publication de la demande:
**28.03.84 Bulletin 84/13**

(45) Mention de la délivrance du brevet:
**20.04.88 Bulletin 88/16**

(84) Etats contractants désignés:
**BE CH DE GB IT LI NL SE**

(56) Documents cités:
**EP-A-0 019 549**
**DE-A-2 336 050**
**FR-A-2 473 833**
**FR-A-2 480 552**
**US-A-3 588 594**

**ELECTRONIC ENGINEERING, vol. 38, no. 457, mars 1966, Londres (GB), J. SWIFT: "A microwave plasma torch", pages 152-154.**

(73) Titulaire: **ANVAR Agence Nationale de Valorisation de la Recherche**
**43, rue Caumartin**
**F-75436 Paris Cédex 09 (FR)**

(72) Inventeur: **Leprince, Philippe**
**13, rue de la Source Perdue**
**Gif sur Yvette (FR)**
Inventeur: **Bloyet, Emile**
**Les Jardins de Courcelles Batiment D**
**F-91190 Gif sur Yvette (FR)**
Inventeur: **Marec, Jean**
**5, rue du Clos St-Jean Boullay les Troux**
**F-91470 Limours (FR)**

(74) Mandataire: **Plaçais, Jean-Yves et al**
**Cabinet Netter 40, rue Vignon**
**F-75009 Paris (FR)**

## Description

L'invention est relative aux générateurs de plasma, et notamment aux dispositifs dans lesquels on produit un plasma à l'extrémité d'un tube pourvu d'un orifice dans lequel circule un gaz.

On connaît, par FR—A— 2 480 552 (EP—A— 0 043 740), un générateur de plasma qui comprend un tube métallique de diamètre relativement faible à l'intérieur duquel on peut faire circuler un gaz, par exemple de l'argon. Le tube est pourvu, à l'une de ses extrémités, d'un orifice par où peut s'échapper le gaz. Il est constitué, en tout ou partie, par un matériau conducteur, de façon à entretenir un plasma à la sortie immédiate de l'orifice lorsqu'on alimente le tube à l'aide d'une énergie hyperfréquence.

Dans le dispositif connu, l'énergie issue d'une source hyperfréquence est transmise par l'intermédiaire d'un câble coaxial à un dispositif de couplage ou structure excitatrice du tube. Dans un mode de réalisation, une telle structure comprend un premier manchon autour du tube de circulation du gaz. Il est entouré d'un deuxième manchon de diamètre sensiblement plus grand et fermé à sa partie postérieure, et comportant, dans sa partie antérieure, une ouverture au centre de laquelle le tube fait saillie à l'extérieur de la structure excitatrice. Les deux manchons sont métalliques, le manchon de plus petit diamètre étant connecté à l'âme du coaxial, tandis que l'autre manchon est connecté à la gaine de celui-ci.

Un dispositif tel qu'il vient d'être résumé, permet de transférer au tube une puissance en hyperfréquence, notamment à des fréquences pouvant atteindre 100 MHz et dépasser plusieurs GHz, jusqu'à un niveau avoisinant le kilowatt. Les impédances du tube et de la structure excitatrice sont adaptées de telle façon qu'en absence de gaz à l'intérieur du tube, l'extrémité antérieure de celui-ci se comporte comme une antenne, c'est-à-dire dissipe sous forme de rayonnement électromagnétique une grande partie, ou même la quasi-totalité de l'énergie hyperfréquence qui lui est communiquée.

Lorsqu'un gaz, introduit à l'extrémité postérieure du tube s'échappe par l'orifice antérieur de celui-ci, l'énergie électromagnétique dans le milieu gazeux environnant immédiatement la sortie du tube est suffisante pour entretenir un plasma dans cette zone, après un amorçage par tout moyen convenable. L'expérience montre alors que les émissions rayonnantes de l'extrémité du tube disparaissent à peu près totalement. La quasi-totalité de l'énergie hyperfréquence transférée à l'extrémité du tube est consommée pour la formation du plasma. Le dispositif ainsi obtenu possède un excellent rendement.

L'invention vise notamment des perfectionnements à des dispositifs générateurs de plasma du type qui vient d'être évoqué ci-dessus. Ces perfectionnements sont notamment destinés à améliorer le domaine de puissance d'utilisation du dispositif et sa versatilité d'emploi.

La torche à plasma proposée est du type comprenant des moyens d'alimentation en énergie hyperfréquence, des moyens d'amenée de gaz comprenant au moins un tube dans lequel on peut faire circuler un gaz et présentant une partie terminale au moins en partie conductrice de l'électricité, et pourvue d'un orifice d'échappement de ce gaz, et des moyens de couplage entre les moyens d'alimentation hyperfréquence et le tube.

Selon l'invention, les moyens d'alimentation hyperfréquence comprennent un guide d'ondes muni d'un court-circuit, à l'opposé de son entrée propre à être raccordée à une source hyperfréquence, et les moyens de couplage comprennent deux ouvertures par lesquelles la partie terminale du tube traverse le guide d'ondes, l'ouverture située dans la paroi latérale du côté de l'orifice du tube étant de dimension supérieure à la dimension transversale du tube tandis qu'un manchon conducteur relié à la paroi latérale du guide d'ondes entoure une portion du tube située du côté de l'orifice d'échappement des gaz.

Selon une forme d'exécution, le tube traverse le guide d'ondes de part en part transversalement à la direction de propagation de l'énergie dans celui-ci.

Grâce à l'invention, on est parvenu à transmettre à un générateur de plasma à tube rayonnant des puissances hyperfréquences extrêmement élevées, pouvant dépasser cinq kilowatts, et atteindre une, voire plusieurs dizaines de kilowatts, et cela à l'aide de structures d'une simplicité remarquable.

En particulier, de tels résultats peuvent être atteints en utilisant un simple guide d'ondes rectangulaire couramment utilisé dans la technique des hyperfréquences, et des moyens de liaison entre ce guide d'ondes et le tube d'amenée de gaz, qui font appel à des fixations de type mécanique tout à fait simples, qu'il s'agisse de soudre ou autre type d'assemblage.

Pour obtenir des réalisations dans lesquelles l'impédance de la flamme de plasma est convenablement adaptée à l'impédance du guide d'ondes, il est avantageux d'utiliser des moyens de couplage complémentaires, et notamment d'entourer la partie du tube d'amenée de gaz émergeant du guide d'ondes du côté de l'orifice d'échappement, à l'aide d'un manchon métallique de dimension transversale égale ou supérieure à celle de l'ouverture correspondante dans la paroi du guide d'ondes.

On a en outre remarqué qu'il pouvait être bénéfique de prévoir une deuxième ouverture dans la paroi latérale opposée du guide d'ondes traversée par le tube et d'aménager autour de cette ouverture un manchon métallique s'étendant autour de la partie postérieure du tube. Ce manchon est pourvu, du côté de son extrémité opposée au guide d'ondes, d'un court-circuit grâce auquel l'énergie hyperfréquence transmise par le guide d'ondes à ce manchon se trouve réfléchie vers la partie antérieure du tube. De préférence, le guide d'ondes est lui-même court-circuité au-delà du tube d'acheminement du gaz dans le sens de la propagation de l'énergie hyperfréquence.

Dans tous les cas, il peut être commode de prévoir que le court-circuit réfléchissant l'énergie transmise à l'extrémité du guide d'ondes et/ou le court-circuit fermant le manchon entourant la partie postérieure du tube d'acheminement du gaz est réglable longitudinalement en position. Un tel réglage permet de réaliser une adaptation optimale de l'impédance de la structure formée par le tube et les manchons en présence du plasma à celle de l'alimentation hyperfréquence.

Il est ainsi possible d'optimiser le rendement de la propagation de l'énergie hyperfréquence transmise au tube, en direction de l'extrémité de ce dernier et de sa transformation en énergie génératrice de plasma. A cet égard, la possibilité de pouvoir augmenter, dans des proportions considérables, l'énergie transmise à l'extrémité du tube, permet d'atteindre des températures de plasma très élevées. Sachant qu'avec les générateurs d'énergie hyperfréquence couramment disponibles à l'heure actuelle, il est possible, par une simple commande électronique, de faire varier l'énergie transmise par le guide d'ondes dans des proportions pouvant varier de 1 à 100 dans des intervalles de temps extrêmement brefs, on réalise que l'invention permet de modifier très rapidement la température d'une flamme de plasma dans des proportions inconnues jusqu'à présent dans des applications pratiques. En outre, le pilotage électronique de la source hyperfréquence permet d'effectuer un réglage de la température de la flamme par contre-réaction lorsqu'on dispose d'un capteur de température sur un objet soumis à l'action de cette flamme.

Des explications complémentaires et la description des modes de réalisation, non limitatifs, sont données ci-après en référence aux dessins annexés, sur lesquels:

la figure 1 est une vue en perspective d'un dispositif de torche selon l'invention, avec coupes et arrachements partiels;

la figure 2 est une vue schématique en coupe selon le plan repéré par les flèches II sur la figure 1 de ladite torche;

la figure 3 est une vue d'une variante de réalisation de la torche de la figure 1, en section par un plan de coupe repéré par les flèches III—III sur la figure 1;

la figure 4 illustre schématiquement la réalisation d'une portion de la torche dans une variante de réalisation, en coupe longitudinale par un plan diamétral du tube;

la figure 5 est une vue en bout d'une variante de réalisation de la torche de la figure 4;

la figure 6 illustre un mode de fonctionnement possible de cette variante;

la figure 7 illustre une troisième variante de réalisation de la torche selon l'invention;

la figure 8 est une vue en perspective de l'extrémité d'une torche selon l'invention, selon encore une autre forme de réalisation.

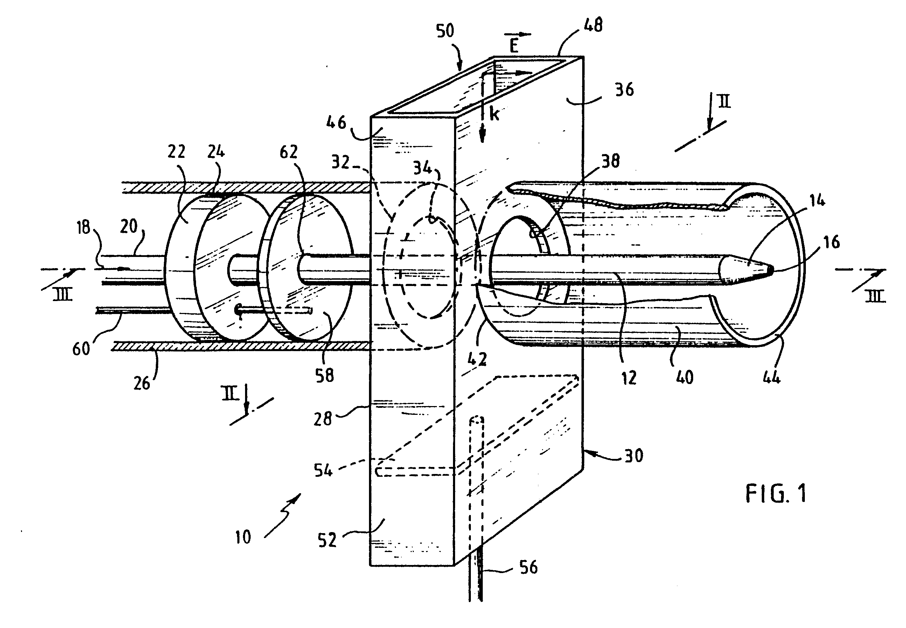

Une torche à plasma 10 (figure 1) comprend un tube métallique 12, par exemple en cuivre présentant un profil effilé 14 à son extrémité antérieure, terminé par un orifice 16 par où peuvent s'échapper des gaz admis selon la flèche 18 à l'extrémité postérieure 20 de ce tube. Le tube 12 est immobilisé, du côté de son extrémité 20, dans une bride de fixation 22 dont la partie périphérique 24 est fixée à l'intérieur d'un manchon métallique rigide 26, de telle façon que le tube 12 et le manchon 26 soient coaxiaux. En avant de la bride 22, le tube 26 se raccorde, en contact conducteur, à une paroi latérale 28 d'un guide d'ondes rectangulaire 30, selon une ligne de raccord circulaire 32. A l'intérieure de cette ligne de raccord 32, la paroi latérale 28 est percée d'une ouverture circulaire 34 de plus petit diamètre et qui est traversée coaxialement par le tube 12. Ce tube ressort du guide d'ondes rectangulaire 30 par une paroi 36 opposée à la paroi 28 et percée d'une ouverture 38 de plus grand diamètre que le tube 12 et coaxiale à ce dernier.

Autour de la partie antérieure du tube 12, est également moné un manchon cylindrique métallique 40 qui se raccorde en contact conducteur à la face antérieure 36 du guide d'ondes 30 selon une ligne de raccord circulaire 42 qui, dans cet exemple, est de plus grand diamètre que l'ouverture 38. Le tube 40 se termine à son extrémité antérieure 44 dans un plan perpendiculaire à l'axe du tube 12 et au voisinage de l'extrémité de l'orifice 16 de celui-ci, ce manchon étant fixé coaxialement au tube 14.

Le guide d'ondes peut être un guide d'ondes couramment disponible dans le commerce pour la transmission en mode électrique transversal $H_{01}$. Les parois 28 et 36 forment les grands côtés de sa section rectangulaire. Les petits côtés de cette section sont délimités par deux parois opposées 46 et 48. Ce guide d'ondes possède une extrémité d'alimentation 50 propre à être raccordée par des moyens conventionnels à une source hyperfréquence non représentée, de façon à permettre à l'énergie électromagnétique de se propager dans ce guide dans la direction longitudinale du tube (flèche $k$), le champ électrique E étant orienté transversalement à la direction $k$ et parallèlement aux petits côtés 46 et 48 du guide d'ondes.

De l'autre côté du tube 12, par rapport à l'extrémité d'admission 50, le guide d'ondes 30 se termine par une extrémité 52 à l'intérieur de laquelle est monté mobile un piston rectangulaire 54 en contact électrique avec les faces internes des parois 28, 36, 46 et 48 du guide d'ondes 30. Ce piston est capable de coulisser, par exemple sous l'action d'une tige de manoeuvre 56, à l'intérieur du guide d'ondes. La position de réglage du piston 54, qui forme un court-circuit à l'intérieur du guide d'ondes et provoque la réflexion des ondes hyperfréquences qui lui parviennent en direction du tube, est l'une des facteurs permettant d'adapter l'impédance du système en vue d'obtenir un bon rendement de la transmission d'énergie hyperfréquence, en direction du système rayonnant formé par le tube 12 et le manchon 40.

La structure formée par les manchons métalliques 26 et 40, et les ouvertures 34 et 38 dans les grandes parois du guide d'ondes, assure le couplage de l'énergie transmise par le guide d'ondes vers le tube 12. Dans l'exemple représenté, on a prévu, entre la bride 22 et la paroi 28 du guide d'ondes, un piston 58 coaxial au tube 12 et déplaçable longitudinalement en position sous l'action d'une tige de commande 60 qui traverse la bride 22. Le piston 58 est en contact conducteur, sur toute sa périphérie, avec l'intérieur du manchon 26. Dans sa partie centrale, il est percé d'une ouverture 62 grâce à laquelle il peut coulisser autour du tube 12 en gardant le contact électrique avec celui-ci. Il forme réflecteur pour les ondes admises par l'entrée 50 du guide d'ondes 30 et l'ouverture 34; sa position est déterminée de façon à ce qu'il renvoie le maximum de l'énergie qui lui parvient en direction de la partie antérieure du tube 12.

En fonctionnement, on peut relier le guide d'ondes 30 à une source hyperfréquence de plusieurs kilowatts. L'energie transférée par ce guide provoque l'excitation du tube 12 qui le traverse transversalement, de telle sorte que son extrémité antérieure 14 se comporte comme un véritable antenne capable de dissiper sous forme de rayonnement toute l'énergie qui lui parvient. Lorsqu'on admet un gaz, notamment un gaz plasmagène tel que de l'argon, à l'extrémité postérieure 20 du tube (flèche 18), il suffit d'un amorçage par une étincelle à l'orifice 16 pour provoquer un début d'ionisation dans le gaz qui s'en échappe. La zone ionisée se développe, puis s'auto-entretient sous l'effet de l'énergie hyperfréquence qui lui est délivrée par le tube 12. Un plasma se forme et les mesures montrent que la quasi-totalité de l'énergie hyperfréquence admise à l'entrée 50 du guide d'ondes 30 est employée à la formation et à l'entretien de ce plasma, les échauffements et les rayonnements parasites étant minimes. En particulier, il est bien net que le plasma formé est localisé à l'avant de l'orifice 16.

Dans la réalisation décrite, seul le tube 12 traverse transversalement l'intérieur du guide d'ondes 30. Les manchons 40 et 26 sont localisés à l'extérieur de celui-ci. Selon les nécessités de l'adaptation d'impédance du système, les ouvertures 38 et 34 peuvent avoir ou non le même diamètre que celles des manchons correspondants. De même, les longueurs et les diamètres des manchons peuvent être différents et varier selon les réalisations. En particulier, si dans les essais effectués par le Demandeur, la présence d'un manchon antérieur tel que 40 s'avère en général souhaitable, celle d'un manchon postérieur 26 n'apparaît pas comme absolument indispensable. Le manchon 40 peut être prolongé au-delà de l'orifice 16 du tube 12 pour obtenir une flamme dans une atmosphère plus pure par exemple.

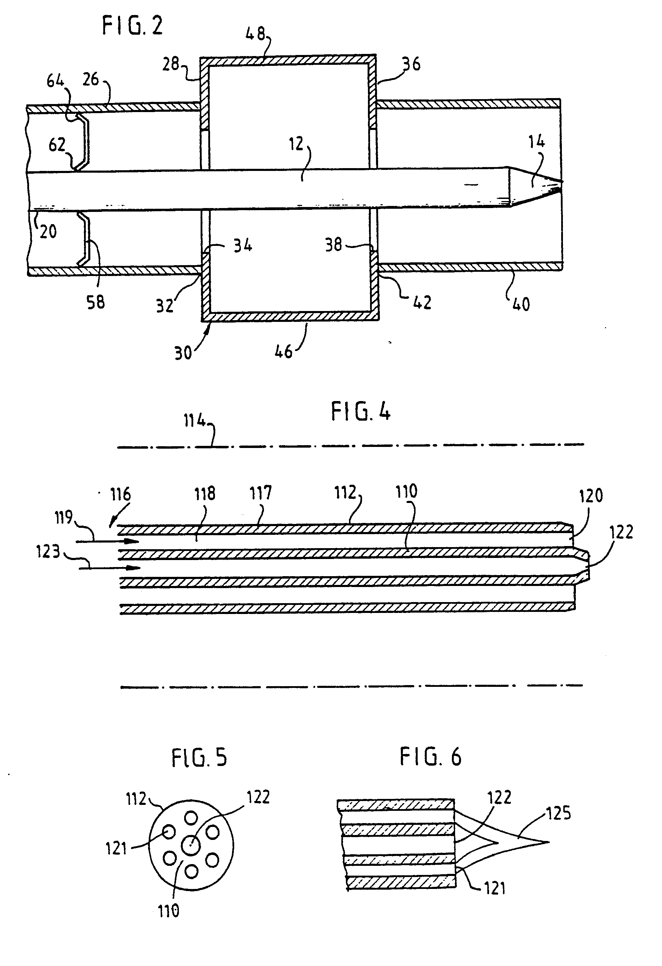

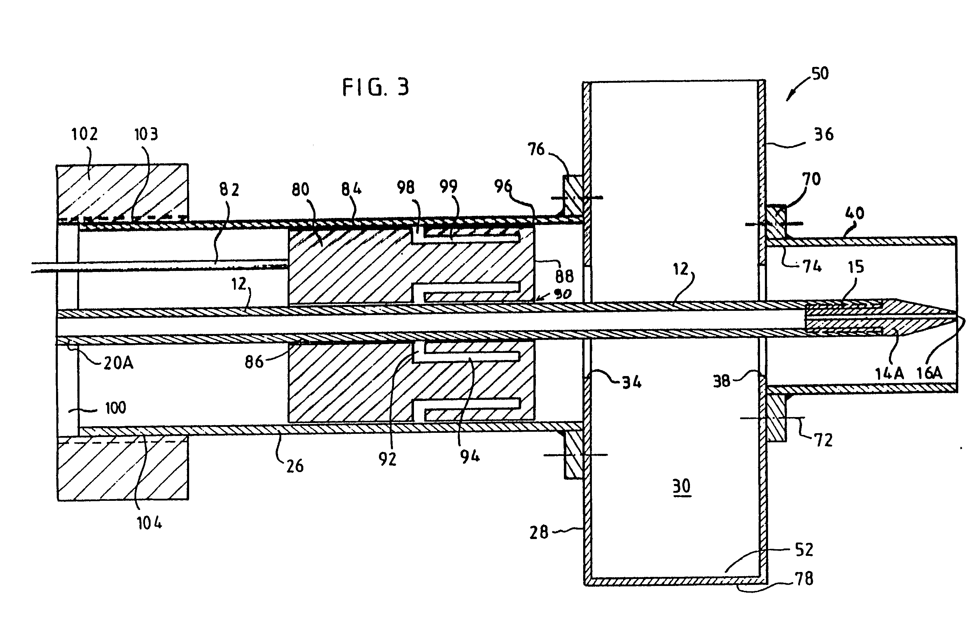

On a représenté sur la figure 2 les portions du piston adaptateur 58 en bordure de l'ouverture axiale 62 et à sa périphérie 64, légèrement rabattues vers l'arrière, de telle façon que ces portions, par leur élasticité propre maintiennent un bon contact avec le tube 12 d'une part, et le manchon 26 d'autre part. Pour les très fortes puissances utilisées avec la réalisation suivant l'invention, il peut, dans certains cas, être désirable, en vue d'éviter des échauffements et des arcs, de remplacer le court-circuit 58 par un court-circuit à piège quart d'onde, comme illustré sur la figure 3.

Sur la figure 3, on a utilisé les mêmes numéros de référence que sur les figures 1 et 2 pour les éléments qui n'ont pas subi de modifications. On se bornera à décrire les seuls éléments modifiés ou faisant l'objet d'illustrations complémentaires. Ainsi, par exemple, le tube 12 est terminé par un embout 14A métallique ou diélectrique amovible et qui peut être par exemple vissé en 15 à l'intérieur du tube 12. L'orifice d'échappement du gaz plasmagène 16A est ménagé à l'extrémité de l'embout 14A. Une bague en tôle 70 est vissée, par exemple, par des vis 72 coaxialement au tube 12 sur la face externe de la paroi 36 du guide d'ondes 30. L'extrémité postérieure 74 du manchon métallique 40 est soudée sur la face interne de la bague 70. Un montage semblable à bague 76 est utilisé pour raccorder l'extrémité antérieure du manchon métallique 26 à la face externe de la paroi 28 du guide d'ondes. Dans l'exemple de la figure 3, l'extrémité 52 de ce guide d'ondes est fermée par une cloison fixe 78.

A l'intérieur du manchon 26 est monté longitudinalement mobile un piège quart d'onde 80 ayant la forme d'un bouchon annulaire. Il peut être monté par exemple par une ou plusieurs tiges telles que 82 prévues de façon à maintenir les parois latérales externe 84 et interne 86 du piège 80, à une faible distance, mais sans contact, respectivement à l'égard de la paroi interne du tube ou du manchon 26 et de la paroi externe du tube 12. Le piège ou bouchon 80 comprend une face annulaire plane 88 tournée du côté de l'ouverture 34 dans le guide d'ondes 30. En bordure interne de cette face 88 subsiste un mince intervalle 90 qui communique, tout autour du tube 12, avec un passage circulaire de direction radiale 92 ménagé dans la partie médiane du bouchon 80. Ce passage communique lui-même avec un puits annulaire 94 foré coaxialement au tube 12 en direction de la face avant 88 et jusqu'au voisinage de cette dernière. La longueur de ce puits annulaire 94 est choisie égale au quart de la longueur d'onde transmise de telle manière que toute l'énergie soit réfléchie.

Une structure semblable est prévue pour l'énergie s'échappant à la périphérie externe de la surface 88 par un intervalle annulaire 96 entre le manchon 26 et la périphérie du bouchon 80, un passage radial 98 étant prévu qui communique avec un puits annulaire 99 également dimensionné au quart de la longueur d'onde à piéger.

Dans l'exemple de la figure 3, on a également montré le montage de l'extrémité arrière 20A du tube 12 sur une bride circulaire 100 solidaire d'une bague 102 pourvue d'un taraudage intérieur 103 qui coopère avec un filetage 104 à l'extérieur de l'extrémité du manchon 26. La rotation de la bague 102 permet d'ajuster avec précision la position longitudinale de l'embouchure 16A du tube 12. Les tiges 82 sont coulissantes dans la bride 100.

Dans un exemple de réalisation, le guide d'ondes 30 transmet en mode $H_{01}$ une énergie à la fréquence de 2450 MHz avec une puissance qui peut être modulée entre 100 watts et 5 kilowatts. Les mesures montrent que le rendement reste dans tous les cas supérieur à 90%. La variation de température correspondante de la flamme peut évoluer entre 1200°C et 5, voire 6000°C.

Les dimensions du guide d'ondes dans cet exemple sont: en section transversale 43 mm × 86 mm.

La longueur du tube 12 est environ 235 mm.

La longueur du manchon antérieur 40 est environ 50 mm.

Le diamètre de l'ouverture 38 permettant le transfert de l'énergie hors du guide d'ondes et vers l'avant du tube 12 est de 32 mm.

Le diamètre externe du tube 12 est 10 mm et son diamètre d'orifice à 16A à l'intérieur de l'embout 14A est de 2 mm.

Le diamètre interne du manchon 40 est de 40 mm.

Le débit du gaz (argon) peut être inférieur à 1 litre par minute.

Les dimensions du manchon métallique 26 sont: longueur environ 140 mm, diamètre interne environ 60 mm, diamètre de l'ouverture 34, 32 mm.

On a ainsi obtenu un montage extrêmement simple pour engendrer des plasmas nécessitant des puissances relativement considérables. Les essais pratiqués ont montré notamment qu'avec un guide d'ondes évoqué ci-dessus, on pouvait faire varier la gamme des puissances transmises dans la mesure indiquée, sans constater pratiquement de perte de rendement. Il est donc possible, à l'aide de ce dispositif, de produire des densités d'énergie considérables et de faire varier ces dernières dans des intervalles de temps très brefs. Ces propriétés sont particulièrement utiles lorsqu'on cherche à traiter des gaz difficiles à ioniser, par conséquence nécessitant des températures très élevées à cet effet. La possibilité d'obtenir des densités d'énergie très importantes est également précieuse dans les opérations de traitement de surface.

La structure qui vient d'être décrite à propos des figures 1 à 3 se prête à des variantes particulièrement remarquables dans certaines utilisations.

Sur la figure 4, on a représenté deux tubes d'acheminement de gaz coaxiaux 110 au centre et 112 à la périphérie. Ces tubes sont montés coaxialement à l'intérieur d'un manchon métallique 114 représenté en tirets. Ils sont connectés à une structure excitatrice hyperfréquence non représentée, du côté de l'une de leurs extrémités 116. Cette structure peut notamment être formée essentiellement par un guide d'ondes tel que 30 des figures 1 à 3 pourvu d'une ouverture appropriée 38, pour permettre à l'énergie hyperfréquence d'en sortir. Le tube 112 est métallique, tout au moins à sa surface extérieure 117. Il définit avec le tube 110 un canal annulaire 118, à l'intérieur duquel peut être acheminé un premier gaz comme l'indique la flèche 119, en direction de son extrémité antérieure 120, laquelle est pourvue d'un orifice annulaire ou plusieurs orifices en couronne pour la sortie du gaz.

Sur la figure 5, on a représenté la face avant d'une combinaison de tubes telle que sur la figure 4. L'extrémité du tube 112 est fermée par une cloison percée d'une série d'orifices 121 répartis sur une couronne centrée sur l'axe commun des tubes 110 et 112. Le tube 110 se termine par un orifice 122.

Le tube 110 peut également être métallique. Toutefois, cela n'est pas indispensable. En effet, l'énergie électromagnétique peut être transmise à la zone de formation de plasma à l'avant des tubes 110 et 112 par la seule surface externe du tube 112.

Le dispositif de la figure 4 présente l'intérêt, considérable en pratique, de permettre d'utiliser ou de former un plasma en faisant participer plusieurs milieux fluides et non un seul gaz, comme précédemment évoqué.

Selon un premier procédé, on alimente le tube interne 110 à l'aide d'un gaz plasmagène, par exemple de l'argon, admis à son extrémité postérieure comme l'indique la flèche 123. On admet, selon la flèche 119 dans l'intervalle annulaire 118, un gaz de gainage, par exemple de l'hélium. Celui-ci, au débouché à l'extrémité 120 de ce tube forme une veine gazeuse tubulaire qui entoure les particules ionisées constituant la flamme de plasma à la sortie 122 du tube 110, et cela sur une longueur qui peut être relativement considérable. Une telle veine gazeuse peut être obtenue avec un débit limité de gaz dans l'intervalle 118, tout en procurant une protection très efficace de la flamme de plasma contre les sources de pollution ou les réactifs non désirés.

Selon un autre procédé d'utilisation, le gaz plasmagène, tel que de l'argon, est admis dans l'espace annulaire 118 et on utilise le tube central 110 pour acheminer un autre gaz ou un autre matériau fluide que l'on désire soumettre à l'action du plasma à la sortie 122 de ce tube. Pour faciliter cette interaction, on peut d'ailleurs prévoir d'orienter les orifices 121 de façon à former une flamme 125 convergente (figure 6) au sortir du tube plasmagène 112. Tout agent parvenant à l'extrémité 122 du tube 110 est alors forcé de traverser la flamme 125.

Cette disposition permet d'envisager de nombreuses applications. En particulier, elle est utile pour l'analyse de tout gaz dont on cherche à connaître le spectre, le plasma permettant d'assurer l'excitation de ce gaz d'une manière très efficace.

Elle est également intéressante dans les applications au traitement de surface par exemple avec des gaz tels que notamment des halogènes ou des halogénures dont l'excitation est en général difficile à obtenir. La disposition considérée est également intéressante en oxycoupage, l'oxygène étant forcé à travers le plasma par le tube central.

Le tube central 110 peut être réalisée en une matière autre que métallique. En particulier, dans le cas où le deuxième gaz, ou gaz dopant, est corrosif à l'égard des métaux, tels que notamment dans le cas du chlore ou du fluor, le système fonctionne avec un tube central résistant chimiquement au gaz véhiculé et constitué en un matériau non conducteur.

On peut également admettre par le tube central 110, tout agent ou matière capable de filer par l'orifice de sortie 122, notamment dans le but d'en provoquer un échauffement très rapide. C'est ainsi par exemple que l'on peut utiliser ce dispositif pour élever la température d'un fil de matière synthétique défilant à grande vitesse d'une quantité suffisante pour modifier sa plasticité sans toutefois affecter sa structure chimique.

Bien entendu, la puissance transférée en hyperfréquence est proportionnée au débit de gaz admis dans les tubes 110 et 112. Dans un exemple de réalisation, on a produit un plasma à partir d'un gaz évacué par un orifice 122 de 2 mm de diamètre et entouré d'une gaine gazeuse à la sortie d'un orifice annulaire 120 de diamètre interne 4 mm et externe 6 mm. Dans un autre exemple, on a produit une flamme de plasma convergente, à partir de huit orifices 121 de diamètre 1 mm répartis sur une couronne de diamètre 8 mm autour d'un orifice central 122 de diamètre 4 mm par lequel la flamme était alimentée en un gaz dopant. Il va de soi que la mise en pratique de l'invention n'est pas limitée au seul cas de deux tubes concentriques.

Dans certaines circonstances, il est utile de pouvoir diriger une flamme dans un emplacement difficilement accessible et/ou de lui donner ou conférer une forme particulière, non nécessairement cylindrique.

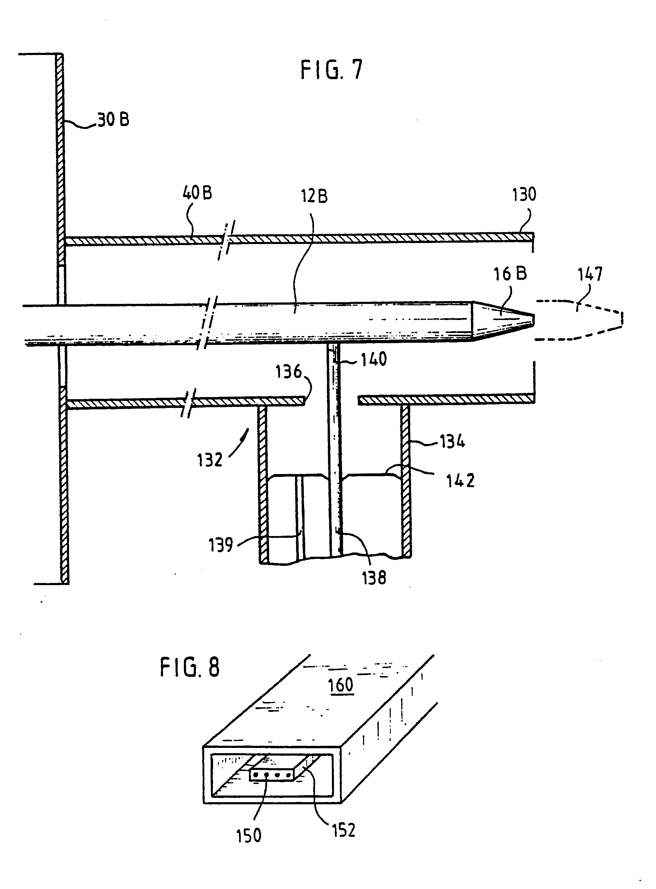

La figure 7 illustre l'extrémité d'une torche du type décrit en référence aux figures 1 à 3, dans laquelle le tube d'amenée du gaz 12B est sensiblement allongé par rapport aux exemples évoqués précédemment. Dans le présent exemple, il peut par exemple atteindre une longueur de plusieurs dizaines de centimètres, par opposition à une longueur de plusieurs centimètres dans les cas précédemment envisagés. Ce tube 12B est entouré d'un manchon 40B se projetant à l'avant du tube guide d'ondes 30B. Le manchon 40B se prolonge jusqu'au voisinage de l'orifice 16B du tube 12B (extrémité 130). Afin d'assurer une transmission parfaitement adaptée de l'énergie hyperfréquence le long du système tube 12B manchon 40B, un adaptateur d'impédance supplémentaire 132 est prévu. Celui-ci se présente sous la forme d'une manche latérale métallique 134 dont une extrémité est en contact conducteur avec la surface externe du manchon 40B autour d'une ouverture 136 en un point intermédiaire dans la paroi latérale de celui-ci. Dans l'axe de la manche 134 est montée une tige 138 en contact électrique avec la face extérieure du tube 12B au point 140. Un court-circuit hyperfréquence 142 est monté coulissant à l'intérieur de la manche 134 et autour de la tige 138. Ce court-circuit peut être réalisé sous la forme d'un piston fixe ou mobile, ou d'un piège quart d'onde comme évoque précédemment et déplacé à l'aide d'une tige 139. On a reconnu en outre qu'un tel adaptateur d'impédance latéral permettait également de prolonger l'extrémité du tube 12B au-delà de l'extrémité 130 du manchon 40B (comme représenté par les pointillés 147), en conservant les qualités de rendement élevé désirées.

On a en outre observé que, grâce à un adaptateur latéral d'impédance tel que 132, on pouvait également modifier la forme du tube 12B afin d'aboutir à des configurations de flamme non cylindriques.

On a représenté en figure 8 une extrémité 150 d'un tube 152 de section rectangulaire, par laquelle s'échappe, par un ou plusieurs orifices, un gaz plasmagène de façon à former une flamme sensiblement plate. Le tube 152 est entouré d'un manchon conducteur 160, métallique, de forme également rectangulaire, jouant un rôle analogue au manchon 40B de la figure 7 et pourvu d'un adaptateur d'impédance tel que 132.

Dans tous les exemples envisagés jusqu'à présent, on a admis que la torche, selon l'invention, permettait de créer une flamme de plasma dans une ambiance à la pression atmosphérique. Ceci est un avantage dans de très nombreuses applications pratiques. Les essais ont montré toutefois qu'il était possible de travailler également à des pressions ambiantes pouvant aller jusqu'à plusieurs atmosphères, tout en conservant l'application des principes selon l'invention.

**Revendications**

1. Torche à plasma du type comprenant des moyens d'alimentation en énergie hyperfréquence, des moyens d'amenée de gaz comprenant au moins un tube (12) dans lequel on peut faire circuler un gaz et présentant une partie terminale au moins en partie conductrice de l'électricité, et pourvue d'un orifice (16) d'échappement de ce gaz, et des moyens de couplage entre les moyens d'alimentation hyperfréquence et le tube, caractérisée en ce que les moyens d'alimentation hyperfréquence comprennent un guide d'ondes (30) muni d'un court-circuit (54), à l'opposé de son entrée (50) propre à être raccordée à une source hyperfréquence, et en ce que les moyens de couplage comprennent deux ouvertures (34, 38) par lesquelles la partie terminale du tube traverse le guide d'ondes, l'ouverture (38) située dans la paroi latérale (36) du côté de l'orifice (16) du tube étant de dimension supérieure à la dimension transversale du tube (12), tandis qu'un manchon conducteur (40) relié à la paroi latérale (36) du guide d'ondes (30) entoure une portion du tube (12) située du côté de l'orifice (16) d'échappement des gaz.

2. Torche selon la revendication 1, caractérisée en ce que le tube (12) traverse le guide d'ondes (30) de part en part transversalement à la direction de propagation de l'énergie dans celui-ci.

3. Torche selon l'une des revendications 1 et 2, caractérisée en ce que ledit guide d'ondes (30) est un guide d'ondes à section droite rectangulaire.

4. Torche selon la revendication 3, caractérisée en ce que le guide d'ondes opère en mode électrique transversal, en particulier $H_{01}$, où le champ électrique est parallèle aux petits côtés de sa section droite rectangulaire.

5. Torche selon l'une des revendications 3 et 4, caractérisée en ce que ladite ouverture (38) traversée par le tube (12) est ménagée dans une grande face du guide d'ondes (30) à section rectangulaire.

6. Torche selon l'une des revendications précédentes, caractérisée en ce que le court-circuit (54) du guide d'ondes (30) est réglable en position, longitudinalement.

7. Torche selon l'une des revendications précédentes, caractérisée en ce que le manchon métallique (40) s'étend jusqu'au voisinage de l'orifice (16) d'échappement des gaz.

8. Torche selon l'une des revendications précédentes, caractérisée en ce que le manchon métallique (40) a une dimension transversale supérieure à celle de l'ouverture correspondante (38) dans le guide d'ondes (30).

9. Torche selon l'une des revendications précédentes, caractérisée en ce que lesdits moyens de couplage comprennent un autre manchon métallique (26) autour dudit tube du côté opposé audit orifice (16) par rapport audit guide d'ondes, l'intérieure de ce manchon (26) communiquant avec l'intérieur du guide d'ondes par une ouverture (34) de dimension transversale supérieure à celle du tube.

10. Torche selon la revendication 9, caractérisée en ce que cet autre manchon (26) est munit intérieurement d'un court-circuit (58), de préférence réglable en position, longitudinalement.

11. Torche selon la revendication 9, caractérisée en ce que ledit autre manchon (26) est muni d'un piège quart-d'onde (80), de préférence réglable en position, longitudinalement.

12. Torche selon l'une des revendications précédentes, caractérisée en ce que l'extrémité (16A) du tube (12) est réglable en position (102), longitudinalement.

13. Torche selon l'une des revendications précédentes, caractérisée en ce que lesdits moyens d'amenée de gaz comprennent au moins deux tubes (110, 112) dont l'un au moins est au moins partiellement conducteur.

14. Torche selon la revendication 13, caractérisée en ce que les deux tubes (110, 112) amènent deux courants de gaz respectifs dans une même zone de formation de plasma.

15. Torche selon l'une des revendications 13 et 14, caractérisée en ce que le deuxième tube (110) est monté à l'intérieur du premier tube (112).

16. Torche selon la revendication 15, caractérisée en ce que ledit deuxième tube (110) est en un matériau non conducteur de l'électricité.

17. Torche selon l'une des revendications 13 à 16, caractérisée en ce que l'orifice de sortie du premier tube (112) est conformé pour provoquer la formation d'un jet convergent sensiblement dans l'axe de sortie du deuxième tube.

18. Torche selon l'une des revendications 13 à 17, caractérisée en ce que le tube intérieur (110) véhicule un gaz plamagène et que le tube extérieure (112) véhicule un gaz de gainage.

19. Torche selon l'une des revendications 13 à 17, caractérisée en ce que le tube extérieur (112) véhicule un gaz plamagène et que le tube intérieur (110) véhicule une autre matière.

20. Torche selon l'une des revendications précédentes, caractérisée en ce que le tube ou l'un des tubes véhicule un matériau souple tel qu'un fil défilant à grande vitesse pour subir un traitement thermique.

21. Torche selon l'une des revendications précédentes, caractérisée en ce que le manchon métallique (40B) est muni latéralement de moyens d'adaptation d'impédance (132).

22. Torche selon la revendication 21, caractérisée en ce que lesdits moyens d'adaptation d'impédance (132) comprennent une manche conductrice (134) débouchant dans une ouverture (136) dans ledit manchon (40B), munie d'une tige centrale (138) raccordée au tube (12B) et fermée à son extrémité opposée au manchon par un court-circuit (142), de préférence mobile en position, longitudinalement.

23. Torche selon l'une des revendications précédentes, caractérisée en ce que ledit tube (16B) présente une section transversale de forme non circulaire.

**Patentansprüche**

1. Plasmafackel von der Art, die Mittel zur Versorgung mit Mikrowellenenergie, Mittel zur Gaszuführung mit mindestens einem Rohr (12), in dem ein Gas zirkulieren kann und das einen Endbereich, der mindestens teilweise elektrisch leitend ist und eine Auslaßöffnung (16) für dieses Gas aufweist, und Mittel zum Koppeln der Mittel zur Versorgung mit Mikrowellen mit dem Rohr aufweist, dadurch gekennzeichnet, daß die Mittel zur Versorgung mit Mikrowellen einen Wellenleiter (30) aufweisen, der mit einem Kurzschluß (54) entgegengesetzt zu seinem Eingang (50), der an eine Mikrowellenquelle angeschlossen werden kann, versehen ist, und daß die Koppelmittel zwei Öffnungen (34, 38) enthalten, durch die der Endbereich des Rohrs den Wellenleiter durchquert, wobei die Öffnung (38), die sich in der Seitenwand (36) auf der Seite der Öffnung (16) des Rohrs befindet, größer ist als die Querabmessung des Rohrs (12), während eine mit der Seitenwand (36) des Wellenleiters (30) verbundene leitende Hülse (40) einen Teil des Rohrs (12) umgibt, der sich auf der Seite der Gasauslaßöffnung (16) befindet.

2. Fackel nach Anspruch 1, dadurch gekennzeichnet, daß das Rohr (12) den Wellenleiter (30) von einer Seite zur anderen quer zur Fortpflanzungsrichtung der Energie in diesem Wellenleiter durchquert.

3. Fackel nach einem der Ansprüche 1 und 2, dadurch gekennzeichnet, daß der Wellenleiter (30) ein Wellenleiter mit rechteckförmigem Querschnitt ist.

4. Fackel nach Anspruch 3, dadurch gekennzeichnet, daß der Wellenleiter in elektrischem Transversalmodus arbeitet, insbesondere $H_{01}$, wo das elektrische Feld parallel zu den kleinen Seiten seines rechteckigen Querschnitts ist.

5. Fackel nach einem der Ansprüche 3 und 4, dadurch gekennzeichnet, daß die vom Rohr (12) durchquerte Öffnung (38) sich in einer großen Fläche des Wellenleiters (30) mit Rechteckquerschnitt befindet.

6. Fackel nach einem der vorhergehenden Ansprüche, dadurch gekennzeichnet, daß der Kurzschluß (54) des Wellenleiters (30) in Längsrichtung verstellbar ist.

7. Fackel nach einem der vorhergehenden Ansprüche, dadurch gekennzeichnet, daß die Metallhülse (40) sich bis in die Nähe der Gasauslaßöffnung (16) erstreckt.

8. Fackel nach einem der vorhergehenden Ansprüche, dadurch gekennzeichnet, daß die Metallhülse (40) eine Querabmessung hat, die größer ist als die der entsprechenden Öffnung (38) im Wellenleiter (30).

9. Fackel nach einem der vorhergehenden Ansprüche, dadurch gekennzeichnet, daß die Koppelmittel eine weitere Metallhülse (26) um das Rohr auf der der Öffnung (16) in bezug auf den Wellenleiter entgegengesetzten Seite aufweisen, wobei das Innere dieser Hülse (26) mit dem Inneren des Wellenleiters durch eine Öffnung (34) verbunden ist, deren Querabmessung größer ist als die des Rohrs.

10. Fackel nach Anspruch 9, dadurch gekennzeichnet, daß diese weitere Hülse (26) innen mit einem Kurzschluß (58) versehen ist, der vorzugsweise in Längsrichtung verstellbar ist.

11. Fackel nach Anspruch 9, dadurch gekennzeichnet, daß diese weitere Hülse (26) mit einer Viertelwellenfalle (80) versehen ist, die vorzugsweise in Längsrichtung verstellbar ist.

12. Fackel nach einem der vorhergehenden Ansprüche, dadurch gekennzeichnet, daß daß Ende (16A) des Rohrs (12) in Längsrichtung verstellbar ist (102).

13. Fackel nach einem der vorhergehenden Ansprüche, dadurch gekennzeichnet, daß die Gaszufuhrmittel mindestens zwei Rohre (110, 112) aufweisen, von denen mindestens eines mindestens teilweise leitend ist.

14. Fackel nach Anspruch 13, dadurch gekennzeichnet, daß die beiden Rohre (110, 112) je einen Gasstrom in ein und denselben Plasmabildungsbereich einführen.

15. Fackel nach einem der Ansprüche 13 und 14, dadurch gekennzeichnet, daß das zweite Rohr (110) im Inneren des ersten Rohrs (112) angebracht ist.

16. Fackel nach Anspruch 15, dadurch gekennzeichnet, daß das zweite Rohr (110) aus einem elektrisch nicht leitenden Material ist.

17. Fackel nach einem der Ansprüche 13 bis 16, dadurch gekennzeichnet, daß die Ausgangsöffnung des ersten Rohrs (112) so gestaltet ist, daß sie die Bildung eines konvergierenden Strahls im wesentlichen in der Ausgangsachse des zweiten Rohrs hervorruft.

18. Fackel nach einem der Ansprüche 13 bis 17, dadurch gekennzeichnet, daß das innere Rohr (110) ein plasmaerzeugendes Gas transportiert und daß das äußere Rohr (112) ein Umhüllungsgas transportiert.

19. Fackel nach einem der Ansprüche 13 bis 17, dadurch gekennzeichnet, daß das äußere Rohr (112) ein plasmaerzeugendes Gas transportiert und daß das innere Rohr (110) einen anderen Stoff transportiert.

20. Fackel nach einem der vorhergehenden Ansprüche, dadurch gekennzeichnet, daß das Rohr oder eines der Rohre ein biegsames Material wie einen Faden transportiert, der mit großer Geschwindigkeit vorbeiläuft, um einer Wärmebehandlung unterworfen zu werden.

21. Fackel nach einem der vorhergehenden Ansprüche, dadurch gekennzeichnet, daß die Metallhülse (40B) seitlich mit Impedanzanpassungsmitteln (132) versehen ist.

22. Fackel nach Anspruch 21, dadurch gekennzeichnet, daß die Impedanzanpassungsmittel (132) eine in eine Öffnung (136) der Hülse (40B) mündende leitende Manschette (134) aufweisen, die mit einem mit dem Rohr (12B) verbundenen zentralen Stab (138) versehen ist, und an ihrem der Hülse entgegengesetzten Ende durch einen vorzugsweise in Längsrichtung verstellbaren Kurzschluß (142) verschlossen ist.

23. Fackel nach einem der vorhergehenden Ansprüche, dadurch gekennzeichnet, daß das Rohr (16B) einen nicht kreisförmigen Querschnitt aufweist.

**Claims**

1. Plasma torch of the type comprising means for a supply of UHF energy, means for feeding gas comprising at least one tube (12) in which a gas can be circulated and which has an end part which is at least partly electroconductive and which is provided with an orifice (16) for the escape of this gas, and means for coupling the means of UHF supply and tube, characterized in that the means of UHF supply comprise a wave guide (30) provided with a short circuit (54) opposite its entrance (50) which can be connected to a UHF source, and in that the means for coupling comprise two openings (34, 38), by means of which the end part of the tube passes through the wave guide, the opening (38) located in the side wall (36) of the side of the orifice (16) of the tube being larger in size than the transverse dimension of the tube (12), while a conductive sleeve (40) connected to the side wall (36) of the wave guide (30) surrounds a section of the tube (12) located on the side of the orifice (16) for the escape of the gases.

2. Torch according to Claim 1, characterized in that the tube (12) passes through the wave guide (30) from one side to the other perpendicularly to the direction of propagation of the energy in the latter.

3. Torch according to one of Claims 1 and 2, characterized in that the said wave guide (30) is a wave guide of rectangular cross-section.

4. Torch according to Claim 3, characterized in that the wave guide operates in transverse electric mode, in particular $H_{01}$, the electric field being parallel to the small sides of its rectangular cross-section.

5. Torch according to one of Claims 3 and 4, characterized in that the said opening (38) through which the tube (12) passes is arranged in a large side of the wave guide (30) of rectangular section.

6. Torch according to one of the preceding claims, characterized in that the position of the short circuit (54) of the wave guide (30) can be adjusted longitudinally.

7. Torch according to one of the preceding claims, characterized in that the metal sleeve (40) extends as far as the proximity of the orifice (16) for the escape of the gases.

8. Torch according to one of the preceding claims, characterized in that the metal sleeve (40) has a transverse dimension greater than that of the corresponding opening (38) in the wave guide (30).

9. Torch according to one of the preceding claims, characterized in that the said means of coupling comprise another metal sleeve (26) around the said tube on the side opposite the said orifice (16) with respect to the said wave guide, the inside of this sleeve (26) communicating with the inside of the wave guide by means of an opening (34) of transverse dimension greater than that of the tube.

10. Torch according to Claim 9, characterized in that this other sleeve (26) is provided on the inside with a short circuit (58) of which the position can preferably be adjusted longitudinally.

11. Torch according to Claim 9, characterized in that the said other sleeve (26) is provided with a quarter-wave block (80) of which the position can preferably be adjusted longitudinally.

12. Torch according to one of the preceding claims, characterized in that the end (16A) of the tube (12) can be adjusted longitudinally in position (102).

13. Torch according to one of the preceding claims, characterized in that the said means of feeding gas comprise at least two tubes (110, 112) of which at least one is at least partially conductive.

14. Torch according to Claim 13, characterized in that the two tubes (110, 112) feed two streams of gas respectively into a single zone for plasma formation.

15. Torch according to one of Claims 13 and 14, characterized in that the second tube (110) is mounted inside the first tube (112).

16. Torch according to Claim 15, characterized in that the said second tube (110) is made of a non-electroconductive material.

17. Torch according to one of Claims 13 to 16, characterized in that the exit orifice of the first tube (112) is suitable for producing the formation of a jet which converges substantially at the axis of the exit of the second tube.

18. Torch according to one of Claims 13 to 17, characterized in that the inside tube (110) conveys a plasmid gas and in that the outside tube (112) conveys an encasing gas.

19. Torch according to one of Claims 13 to 17, characterized in that the outside tube (112) conveys a plasmid gas and in that the inside tube (110) conveys another material.

20. Torch according to one of the preceding claims, characterized in that the tube or one of the tubes conveys a flexible material such as a filament which is run off at high speed to undergo a heat treatment.

21. Torch according to one of the preceding claims, characterized in that the metal sleeve (40B) is provided at the side with means (132) for correcting impedance.

22. Torch according to Claim 21, characterized in that the said means (132) for correcting impedance comprise a conductive sleeve (134) which opens out into an opening (136) in the said sleeve (40B), is provided with a central rod (138) connected to the tube (12B) and is closed at its end opposite the sleeve by a short circuit (142), of which the position is preferably movable longitudinally.

23. Torch according to one of the preceding claims, characterized in that the said shape (16B) has a cross-section which is not circular in shape.

FIG. 1

0 104 109

FIG. 2

FIG. 4

FIG. 5

FIG. 6

FIG. 3

FIG. 7

30 B

40 B    12 B    130

16 B    147

140

136

132    134

142

139

138

FIG. 8

160

150    152